# FASCICULE DE BREVET EUROPEEN

(11) **EP 1 346 781 B1**
(45) Date de publication et mention de la délivrance du brevet: **23.10.2013**
(21) Numéro de dépôt: 03362002.2
(22) Date de dépôt: 17.03.2003
(51) Int. Cl.: B29C 65/08, B29C 65/64, B29C 70/82

(54) **Procédé de collage par ultrason**
Ultraschallfügeverfahren
Ultrasonic bonding method

(30) Priorité: 25.03.2002 FR 0203680
(43) Date de publication de la demande: 24.09.2003
(73) Titulaire: AIRBUS OPERATIONS (S.A.S), 31060 Toulouse (FR)
(72) Inventeur: Boussu, Maxime, 44310 Saint Lyphard (FR); Rambaud, Eric, 44840 Les Sorinières (FR)

(56) Documents cités:
- EP-A- 0 261 850
- FR-A- 2 507 533
- GB-A- 2 044 172
- US-A- 3 765 973
- US-A- 4 704 172
- US-A- 5 971 099
- PATENT ABSTRACTS OF JAPAN vol. 010, no. 109 (M-472), 23 avril 1986 (1986-04-23) -& JP 60 239224 A (YANMAR DIESEL KK), 28 novembre 1985 (1985-11-28)
- PATENT ABSTRACTS OF JAPAN vol. 1996, no. 10, 31 octobre 1996 (1996-10-31) -& JP 08 150669 A (SHIN KOBE ELECTRIC MACH CO LTD), 11 juin 1996 (1996-06-11)

## Description

La présente invention se rapporte à un procédé de collage par ultrason plus particulièrement destiné à l'assemblage d'éléments dont au moins un est imprégné d'une résine.

Les techniques de collage sont largement utilisées dans le domaine des composites, notamment dans les procédés de réalisation de panneau acoustiquement absorbant, et plus particulièrement dans l'élaboration de la couche résistive.

Conformément à l'enseignement de la demande de brevet EP 1271 468 A1. au nom de la demanderesse, une couche résistive comprend un premier élément d'amortissement acoustique sous forme d'une surface poreuse, par exemple d'un tissu acoustique métallique et au moins un deuxième élément de renfort structural sous forme par exemple de fibres pré-imprégnées d'une résine thermodurcissable ou thermoplastique ou d'un mélange de résines. Généralement, la couche résistive est réalisée à partir de bandes multicouches comportant les éléments d'amortissement acoustique et de renfort structural.

La liaison par collage utilisant une ou plusieurs résines doit garantir non seulement une liaison mécanique solide entre les différentes éléments, mais également préserver le taux d'ouverture de l'élément d'amortissement acoustique dans le cas présent.

Pour obtenir des propriétés mécaniques optimales, la liaison par collage doit être réalisée à une température et une pression appropriées fonction de la résine utilisée.

Une des techniques utilisées pour réaliser ce collage consiste à utiliser une torche à azote soufflant de l'azote chaud pour apporter la quantité de chaleur nécessaire à la mise en oeuvre de la résine et un rouleau presseur pour appliquer une pression sur les couches pour la mise en oeuvre de la résine.

Cette technique ne donne pas satisfaction pour les raisons suivantes.

Tout d'abord, les lieux de chauffage et de pression sont décalés, ce qui induit nécessairement un refroidissement de la résine, si bien qu'au moment de sa mise en oeuvre, lors de la pression, cette dernière n'est pas à la température requise, altérant inévitablement les caractéristiques d'adhésion et donc la qualité de la liaison. Pour compenser ce refroidissement dû au décalage, on est amené à surchauffer les matériaux au risque de brûler les éléments ou la résine et de lui faire perdre ses propriétés d'adhésion.

Ensuite, le chauffage est effectué de manière surfacique, si bien qu'il est nécessaire de surchauffer le matériau d'une des couches afin d'obtenir une bonne pénétration thermique.

Enfin, compte tenu des nombreux paramètres en jeu, le contrôle de la température de chauffe de la résine est quasiment impossible, si bien qu'il est très difficile d'obtenir une qualité de liaison constante et reproductible. Aussi, cette technique ne peut être utilisée pour une fabrication de type industrielle, notamment pour assurer la liaison de bandes entre elles lorsque ces dernières sont disposées sur un moule.

Le document FR 2 507 533 A propose un procédé de collage de membranes humides par ultrasons utilisant des colles dont un solvant a été au préalable retiré par évaporation pour rendre la colle solide.

Aussi, la présente invention vise à pallier aux inconvénients de l'art antérieur en proposant un procédé de collage d'au moins deux éléments dont au moins un est imprégné d'une résine ou d'un mélange de résines, permettant une mise en oeuvre optimale de la résine de manière reproductible, en limitant les risques d'altération par surchauffe des matériaux des couches liées mais également de la résine, ladite mise en oeuvre étant susceptible de s'intégrer aisément dans un process industriel.

A cet effet, l'invention a pour objet un procédé de collage d'au moins deux éléments dont au moins un est imprégné d'une résine ou d'un mélange de résines thermoplastiques thermostables caractérisé en ce que les éléments sont mis en contact grâce à des moyens de pression qui sont susceptibles également de transmettre des vibrations à au moins un des éléments de manière à obtenir une élévation de température par friction au niveau de l'interface jusqu'à la température de mise en oeuvre comprise dans un pallier, traduisant un accroissement de température moins rapide, correspondant au passage de l'état solide à l'état liquide de la résine ou du mélange de résines.

De préférence, lorsque l'un des éléments comprend des ouvertures, la température de mise en oeuvre est choisie au début du pallier.

Selon une autre caractéristique, pour coller plusieurs éléments utilisant plusieurs types de résines ou mélanges de résines, il est préférable de réaliser le collage en plusieurs étapes en fonction du nombre de types de résines ou de mélanges de résines afin d'ajuster la température de mise en oeuvre à chaque type.

Selon un mode de réalisation préféré, les moyens de pression et de transmission de vibrations comprennent une tête de sonotrode qui est susceptible de transmettre les vibrations et un effort de pression ajustable et de presser les éléments contre un élément d'appui.

En fonction des applications, les éléments à coller défilent sous la tête de la sonotrode où cette dernière se déplace par rapport auxdits éléments.

D'autres caractéristiques et avantages ressortiront de la description qui va suivre de l'invention, description donnée à titre d'exemple uniquement, en regard des dessins annexés sur lesquels :
- la figure 1 est une représentation schématique illustrant le procédé de l'invention,
- la figure 2 est une courbe d'élévation de température selon le procédé de l'invention, et
- la figure 3 est une courbe d'élévation de température selon un procédé de l'art antérieur.

Un panneau acoustique comprend généralement au moins une couche résistive plus ou moins perméable à l'air combinée à au moins une structure alvéolaire de type nid d'abeilles l'ensemble étant rapporté sur un réflecteur total.

La couche résistive se présente généralement sous forme de bandes juxtaposées et comprend généralement un premier constituant d'amortissement acoustique sous forme par exemple d'un tissu acoustique métallique et au moins un deuxième constituant de renfort structural sous forme par exemple de fibres pré-imprégnées d'une résine thermodurcissable ou thermoplastique ou d'un mélange de résines.

Le constituant d'amortissement acoustique est de préférence constitué par un tissu en grillage inoxydable du type de ceux commercialisés sous la marque GANTOIS.

De préférence, le constituant de renfort est constitué de fibres par exemple de carbone, de verre ou de la KEVLAR^{®}, sous forme de fils, de mèches, de tresses ou de brins de fils de section variable.

Pour assurer la liaison entre ces deux constituants, on a recours à une résine ou un mélange de résines. La ou les résines sont des résines thermoplastiques thermostables, telles que celle des familles des polyétherimides (PEI), des polyétheréthercétones (PEEK), des polyphénylènesulfones (PPS), des polyamides (PA) et le polyéthylènetéréphtalate (PET).

Pour la suite de la description, par résine on comprendra une résine ou un mélange de résines.

Selon l'invention, au moins un des deux constituants est pré-imprégné de résine en utilisant toute méthode appropriée, telle que par trempage par exemple. Avantageusement, les fibres en matériau composite sont pré-imprégnées.

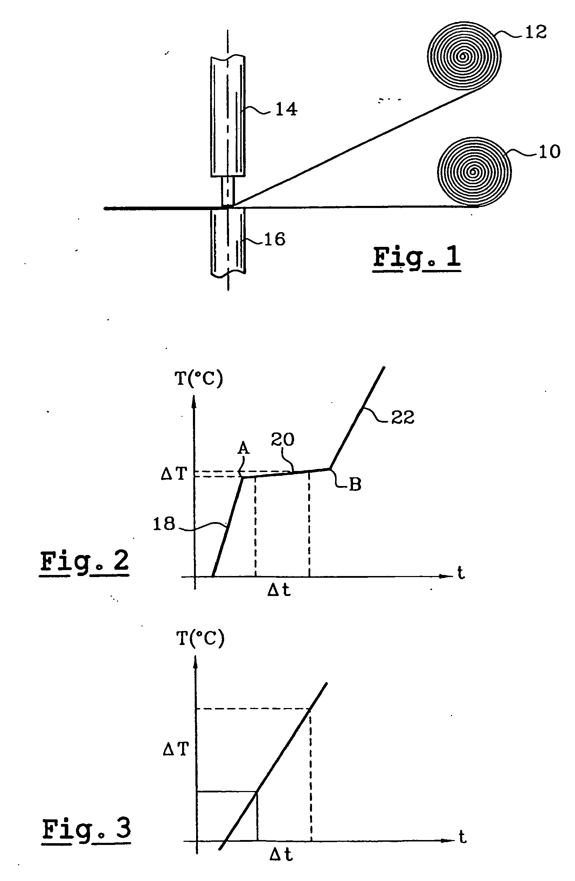

Préalablement à l'étape de collage, pour un stockage et une utilisation plus aisés, les deux constituants d'amortissement acoustique et de renfort structurel se présentent sous forme de bandes enroulées, respectivement 10 et 12, représentées sur la figure 1 par des bobines.

Pour l'opération de collage proprement dite, les deux bandes 10 et 12 sont mises en contact grâce à des moyens de pression qui sont susceptibles également de transmettre des vibrations à au moins une des deux bandes 10 ou 12.

Selon un mode de réalisation, ces moyens de pression et de transmission de vibration comprennent une tête de sonotrode 14 qui est susceptible de transmettre les vibrations et un effort de pression ajustable et de presser les bandes 10 et 12 l'une contre l'autre, contre une enclume 16.

La fréquence des vibrations est déterminée par l'homme du métier en fonction notamment, de l'encombrement de la sonotrode, de la puissance requise, de l'épaisseur des produits à chauffer et de leur nature.

Les vibrations transmises aux bandes génèrent deux phénomènes de chauffage, un chauffage volumique grâce à une agitation moléculaire et un chauffage à l'interface entre les deux bandes produit par friction.

A titre indicatif, dans le cas d'une résine PEI, le chauffage volumique absorbe 10 à 15 % de la puissance de chauffage, le reste servant à l'élévation de température au niveau de l'interface.

Ainsi, selon le procédé de l'invention, on constate une forte et rapide élévation de température au niveau de l'interface entre les deux bandes, ce qui permet la mise en température de la résine présence à ce niveau.

Dans le cas d'une utilisation d'une résine thermoplastique, l'élévation de température au niveau de l'interface permet de modifier l'état de ladite résine qui passe d'un état solide à un état visqueux ou liquide correspondant à son état de mise en oeuvre.

La température de mise en oeuvre de la résine étant toujours inférieure à la température de fusion des éléments à mettre en contact, on note que cette solution technique empêche tous risques d'altération des éléments en contact par surchauffe. En effet, le chauffage volumique étant très faible par rapport au chauffage à l'interface, l'élévation de température est parfaitement localisée à l'endroit de la mise en oeuvre de la résine, les éléments à assembler n'étant soumis qu'à une faible élévation de température, dans tous les cas, inférieure à la température de mise en oeuvre de la résine et donc inférieure à leur fusion.

A titre indicatif, la température de mise en oeuvre d'une résine PEI est de l'ordre de 300°C et pour une résine PEEK de l'ordre de 400°C.

Par ailleurs, la sonotrode transmettant à la fois les vibrations et l'effort de pression, il n'existe aucun décalage entre le chauffage et la mise sous pression ce qui permet une mise en oeuvre optimale de la résine. Ainsi, il n'est plus nécessaire de surchauffer la résine pour obtenir une température idéale de mise en oeuvre lors de l'effort de pression, ce qui est le cas lorsque cet effort est décalé par rapport au chauffage.

Selon un autre avantage de l'invention, ce procédé de collage peut être mis en oeuvre in situ lors de la réalisation du panneau acoustique et plus particulièrement lors de la mise en place des bandes, les parois du moule ou tout autre élément solide, par exemple le nid d'abeilles, étant susceptibles de constituer un élément d'appui à la manière d'une enclume. Dans ce cas, la tête de la sonotrode est susceptible de se déplacer et d'appliquer lors de son déplacement l'effort de pression et les vibrations.

Selon une autre caractéristique de l'invention, le procédé de collage permet également une régulation naturelle de la température.

En effet, lorsque les matériaux en contact sont à l'état solide, on constate une élévation de température rapide, correspondant à la portion 18 de la courbe de la figure 2, illustrant l'élévation de température au niveau de l'interface en fonction du temps.

Quand la résine passe de l'état solide à l'état visqueux ou liquide, elle agit comme un lubrifiant entre les deux bandes, ce qui se traduit par un accroissement de température moins rapide, correspondant au pallier 20. Si on continue à chauffer, la résine peut se vaporiser ou du moins devenir trop liquide et fluer lors de la pression, si bien que l'échauffement par friction reprend, aucun élément n'étant plus présent, ce qui se traduit par une forte augmentation de température correspondant à la portion 22.

Comme on peut le voir sur la figure 3, les autres techniques de chauffage pour la mise en oeuvre de la résine ne permettent d'avoir ce pallier de réglage, l'augmentation de température étant sensiblement linéaire, si bien qu'il est très difficile de régler ce paramètre.

Ainsi, on note que selon le procédé pour une durée t l'élévation de température T est très faible contrairement au procédé de l'art antérieur pour lequel on constate une forte élévation de température T pour la même durée.

Dans le cas d'un collage en continue, comme illustré sur la figure 1, la quantité d'énergie apportée qui correspond sensiblement à la montée en température de la résine dépend d'une part de la puissance délivrée par la sonotrode qui délivre une quantité de chaleur par unité de temps, et d'autre part, de la vitesse de défilement des bandes ou de déplacement de la tête de la sonotrode. Même si la sonotrode délivre une puissance sensiblement constante dans le temps, la vitesse de défilement par contre peut être amenée à varier lors du procédé.

Aussi, grâce à la présence de ce pallier, même si les paramètres, notamment la vitesse, ne sont pas stables dans le temps, les fluctuations ne génèrent qu'une faible variation de la quantité d'énergie apportée ou de l'élévation de température, si bien que les conditions de collage à savoir la pression et la température sont sensiblement constantes permettant d'obtenir une qualité de collage et donc des qualités mécaniques sensiblement constantes, permettant une industrialisation aisée du procédé.

Il est important de noter que le procédé comprend également une phase de montée de température initiale rapide comme les procédés de l'art antérieur, ce qui contribue à obtenir une vitesse de réalisation du même ordre de grandeur que les procédés de l'art antérieur.

L'invention a également pour objet un procédé de réglage simple des paramètres utilisés lors du procédé de collage.

Ce procédé de réglage consiste à délimiter le pallier 20 par essai, c'est-à-dire définir les points A et B de début et de fin de pallier et régler une température de mise en oeuvre de la résine comprise dans ce pallier en ajustant les paramètres de la sonotrode et la vitesse de défilement. Le dispositif pour la mise en oeuvre du procédé est alors réglée pour ne pas dépasser la température correspondant à la température d'altération de la résine.

Le procédé est alors fiable, répétitif et industriel.

Lorsque l'un des éléments collés comprend des ouvertures, par exemple un tissu en grillage, il est important de conserver un taux d'ouverture. A cet effet, il est préférable de choisir des paramètres de réglage permettant d'obtenir une température proche du début du pallier A, correspondant à une viscosité importante de la résine, pour éviter que cette dernière ne flue et ne vienne obturer les ouvertures.

Selon une autre caractéristique de l'invention, le procédé de l'invention peut être utilisé pour assembler plusieurs éléments ou couches entre eux en une seule étape. Toutefois, lorsque l'assemblage comprend des résines différentes, il est préférable de réaliser l'assemblage en plusieurs étapes afin d'ajuster les paramètres du procédé à la résine, pour ne pas brûler la résine ayant la température de fusion la plus basse.

Pour assembler plus de deux couches, on peut utiliser plusieurs sonotrodes disposées de manière à former une chaîne, les moyens d'alimentation en couche permettant à chaque sonotrode d'apporter au moins une couche supplémentaire.

A titre d'exemple, pour la réalisation d'une couche résistive comportant un constituant d'amortissement acoustique sous forme d'un tissu en grillage métallique renforcé sur chacune de ses faces avec une bande de carbone dont l'une est imprégnée de résine PEI et l'autre d'une résine PEEK, on commence à coller une première face du tissu en grillage métallique avec la bande de carbone imprégnée de résine PEEK. Puis, sur la seconde face du tissu en grillage métallique, on vient coller, l'autre bande de carbone imprégnée de PEI. Le PEEK ayant une température de mise en oeuvre plus élevée que le PEI, il est préférable de coller d'abord la bande imprégnée de PEEK afin de ne pas décoller la bande imprégnée de PEI.

Bien entendu, l'invention n'est évidemment pas limitée au mode de réalisation représenté et décrit ci-dessus, mais en couvre au contraire les variantes comprises dans le champ des revendications, notamment en ce qui concerne la nature des couches collées entre elles.

Enfin, ce procédé peut aussi bien être utilisé pour le collage de couches ou d'éléments pour former une bande que pour le collage de bandes monoconstituant ou multi-constituants entre elles.

## Revendications

1. Procédé de collage d'au moins deux éléments (10, 12) dont au moins un est imprégné d'une résine ou d'un mélange de résines thermoplastiques thermostables, **caractérisé en ce qu'**il comporte au moins :
une étape de mise en contact des éléments par des moyens de pression;
une étape de transmission de vibrations à au moins un des éléments par lesdits moyens de pression ;
une étape d'élévation de température par friction jusqu'à une température de mise en oeuvre de la résine ou du mélange de résines
une étape de maintien de la température de mise en oeuvre selon un palier correspondant au passage de l'état solide à l'état liquide de la résine ou du mélange de résines;
la température de mise en oeuvre de la résine ou du mélange de résines étant inférieure à la température de fusion des éléments mis en contact.

2. Procédé de collage d'au moins deux éléments dont un comprend des ouvertures suivant la revendication 1, **caractérisé en ce que** la température de mise en oeuvre est choisie au début du pallier (20).

3. Procédé de collage de plusieurs éléments utilisant plusieurs types de résines ou mélanges de résines selon la revendication 1 ou 2, **caractérisé en ce qu'**il comprend plusieurs étapes fonction du nombre de types de résines ou de mélanges de résines afin d'ajuster la température de mise en oeuvre à chaque type.

4. Procédé de collage selon l'une quelconque des revendications 1 à 3, **caractérisé en ce que** les moyens de pression et de transmission de vibrations comprennent une tête de sonotrode (14) qui est susceptible de transmettre les vibrations et un effort de pression ajustable et de presser les éléments (10, 12) contre un élément d'appui (16).

5. Procédé de collage suivant la revendication 4, **caractérisé en ce que** les éléments à coller se présentent sous forme de bandes défilant entre la tête de la sonotrode (14) et l'élément d'appui.

6. Procédé de collage suivant la revendication 4, **caractérisé en ce que** la tête de la sonotrode (14) se déplace par rapport aux éléments à coller.

7. Procédé de collage selon l'une des revendications précédentes pour lequel la ou les résines sont choisies parmi les polyétherimides, les polyétheréthercétones, les polyphéhylénesulfones, les polyamides et le polyéthylènetéréphtalate.

## Patentansprüche

1. Verfahren zum Zusammenkleben von wenigstens zwei Elementen (10, 12), wovon wenigstens eines mit einem Harz oder mit einem Gemisch aus Harzen, die thermisch stabil und thermoplastisch sind, imprägniert ist, **dadurch gekennzeichnet, dass** es wenigstens Folgendes umfasst:
einen Schritt, um die Elemente durch Pressmittel miteinander in Kontakt zu bringen;
einen Schritt, um Vibrationen durch die Pressmittel an wenigstens eines der Elemente zu übertragen;
einen Schritt, um die Temperatur durch Reibung bis auf eine Temperatur für die Verwendung des Harzes oder des Harzgemisches zu erhöhen;
einen Schritt, um die Verwendungstemperatur während einer Zeitdauer zu halten, die dem Übergang vom festen Zustand in den flüssigen Zustand des Harzes oder des Harzgemisches entspricht;
wobei die Temperatur für die Verwendung des Harzes oder des Harzgemisches niedriger als die Schmelztemperatur der in Kontakt gebrachten Elemente ist.

2. Verfahren zum Zusammenkleben von wenigstens zwei Elementen, wovon eines Öffnungen enthält, nach Anspruch 1, **dadurch gekennzeichnet, dass** die Verwendungstemperatur am Beginn der Zeitdauer (20) gewählt wird.

3. Verfahren zum Zusammenkleben mehrerer Elemente unter Verwendung mehrerer Typen von Harzen oder Harzgemischen nach Anspruch 1 oder 2, **dadurch gekennzeichnet, dass** es in Abhängigkeit von der Anzahl von Typen von Harzen oder Harzgemischen mehrere Schritte umfasst, um die Verwendungstemperatur für jeden Typ einzustellen.

4. Klebeverfahren nach einem der Ansprüche 1 bis 3, **dadurch gekennzeichnet, dass** die Press- und Vibrationsübertragungsmittel einen Sonotrodenkopf (14) umfassen, der die Vibrationen und eine einstellbare Druckkraft übertragen kann und die Elemente (10, 12) gegen ein Abstützelement (16) pressen kann.

5. Klebeverfahren nach Anspruch 4, **dadurch gekennzeichnet, dass** die zusammenzuklebenden Elemente die Form von Bändern haben, die sich zwischen dem Kopf der Sonotrode (14) und dem Abstützelement vorbeibewegen.

6. Klebeverfahren nach Anspruch 4, **dadurch gekennzeichnet, dass** sich der Kopf der Sonotrode (14) in Bezug auf die zu verklebenden Elemente verlagert.

7. Klebeverfahren nach einem der vorhergehenden Ansprüche, für das das eine oder die mehreren Harze aus Polyetherimiden, Polyetheretherketonen, Polyphenylensulfonen, Polyamiden und Polyethylenterephthalat gewählt sind.

## Claims

1. Method for bonding at least two elements (10, 12), at least one of which is impregnated with a thermoplastic, heat-resistant resin or with a mixture of thermoplastic, heat-resistant resins, **characterised in that** said method comprises at least:
a step of bringing said elements into contact by pressing means;
a step of transmitting vibrations to at least one of the elements via said pressing means;
a step of raising the temperature by friction to a working temperature of the resin or resin mixture; and
a step of holding the working temperature at a plateau temperature corresponding to the transition of the resin or mixture of resins from the solid state to the liquid state,
the working temperature of the resin or mixture of resins being lower than the melting point of the elements that are brought into contact.

2. Method of bonding at least two elements, one of which contains apertures, according to Claim 1, **characterised in that** the working temperature is chosen at the start of the plateau (20).

3. Method of bonding a plurality of elements using a plurality of types of resins or mixtures of resins, according to Claim 1 or 2, **characterised in that** said method comprises a plurality of steps depending on the number of types of resins or mixtures of resins, so as to adjust the working temperature to each type.

4. Bonding method according to one of Claims 1 to 3, **characterised in that** the pressing and vibration-transmitting means include a sonotrode (14) head that is capable of transmitting vibrations and an adjustable pressing force and of pressing the elements (10, 12) against a supporting element (16).

5. Bonding method according to Claim 4, **characterised in that** the elements to be bonded take the form of strips that pass between the head of the sonotrode (14) and the supporting element.

6. Bonding method according to Claim 4, **characterised in that** the head of the sonotrode (14) moves relative to the elements to be bonded.

7. Bonding method according to one of the preceding claims, in which the resin or resins are chosen from polyetherimides, polyetheretherketones, polyphenylenesulfones, polyamides and polyethylene terephthalate.
